# EUROPEAN PATENT APPLICATION

(11) **EP 2 620 853 A1**
(43) Date of publication of application: **31.07.2013**
(21) Application number: 11826684.0
(22) Date of filing: 29.08.2011
(51) Int. Cl.: G06F 3/048, G06F 3/041

(54) **DISPLAY DEVICE**

(30) Priority: 24.09.2010 JP 2010213795
(71) Applicant: NEC Corporation, Tokyo 108-8001 (JP)
(72) Inventor: MIYAHARA, Masaki, Tokyo 108-8001 (JP)
(74) Representative: Vossius & Partner
(86) International application number: PCT/JP2011/069403
(87) International publication number: WO 2012/039238

(57) **Abstract**

A storing unit (120) stores the order in which a plurality of applications being loaded display screen images on the display units (110-1, 110-2) having a touch panel function, with display information indicating the display unit, either display unit (110-1) or display unit (110-2), on which each screen image is displayed. When display unit (110-1, 110-2) receives a predetermined input by the touch panel function, display control unit (130) displays thumbnails corresponding to applications in accordance with the order and display information stored by the storing unit (120).

## Description

### Technical Field

The present invention relates to a display device, display method and program for displaying screen images, in particular, relating to a display device, display method and program for displaying screen images on a plurality of displays.

### Background Art

Generally, in displaying, for example, a Web page described in HTML (HyperText Markup Language) on a Web browser, there has been considered a technology which, when display for performing screen page transition such as "back" and "forward" is given and any of these is selected, switches the displayed screen page based on the history of past screen page transition (see Patent Document 1, for example).

### Related Art Documents

### Patent Document

Patent Document 1: JP2000-322173A

### Summary of the Invention

### Problems to be Solved by the Invention

However, in the above-described technology, there is a problem in which the user cannot grasp the history of screen page transition. When a plurality of applications are being loaded simultaneously, the same thing can be said on the history of screen image transition of the screen images that were displayed by the multiple applications.

The object of the present invention is to provide a display device, display method and program for solving the above-described problem.

### Means for Solving the Problems

A display device of the present invention includes:
a plurality of display units having a touch panel function;
a display control unit for controlling display of screen images on the multiple display units; and,
a storing unit for storing the order in which a plurality of applications being loaded display the screen images on the display units, with display information indicating the display unit on which each screen image is displayed, of the multiple display units, and
the display control unit displays thumbnails corresponding to the applications in a strata manner in accordance with the order and display information stored in the storing unit when the display units receives a predetermined input by the touch panel function.

A display method of the present invention is a display method of displaying screen images in a device equipped with a plurality of displays having a touch panel function, comprising:
a storing step of storing the order in which a plurality of applications being loaded display the screen images on the displays, with display information indicating the display on which each screen image is displayed, of the multiple displays; and
a strata display step of displaying thumbnails corresponding to the applications in a strata manner in accordance with the stored order and display information when the displays receive a predetermined input by the touch panel function.

A program of the present invention is a program causing a device which is equipped with a plurality of displays having a touch panel function and displays screen images on the displays, to execute
a storing procedure of storing the order in which a plurality of applications being loaded display the screen images on the displays, with display information indicating the display on which each screen image is displayed, of the multiple displays, and
a strata display procedure of displaying thumbnails corresponding to the applications in a strata manner in accordance with the stored order and display information when the display has receives a predetermined input by the touch panel function.

### Effect of the Invention

As described heretofore, in the present invention, it is possible for the user to readily grasp the history of screen image transition.

### Brief Description of Drawings

FIG. 1 is a diagram showing one exemplary embodiment of a display device of the present invention.
FIG. 2 is a chart showing one example of the order in which applications display screen images on display units, stored in the storing unit shown in FIG. 1.
FIG. 3 is a chart showing one example of thumbnails each corresponding to an application, stored in the storing unit shown in FIG. 1.
FIG. 4 is a flow chart for illustrating a process of storing ordinal information, in the display method in the display device shown in FIG. 1.
FIG. 5 is a chart showing one example of ordinal information stored in a storing unit, with the earliest ordinal information deleted.
FIG. 6 is a chart showing one example of ordinal information stored in a storing unit, with the order updated.
FIG. 7 is a chart showing one example of ordinal information stored in a storing unit, with an application recorded as the latest order at Step 6.
FIG. 8 is a flow chart for illustrating the process of displaying strata information, in the display method in the display device shown in FIG. 1.
FIG. 9 is a diagram showing one example of screen images displayed on the display units shown in FIG. 1.
FIG. 10 is a diagram showing one example of strata display, displayed on a display unit.
FIG. 11 is a diagram showing one example of screen images displayed on the display units after a browser thumbnail was selected.
FIG. 12 is a chart showing one example of ordinal information after rearrangement was performed at Step 16.
FIG. 13 is a diagram showing an example of transition directive display for performing screen image transition displayed on the display units.
FIG. 14 is a diagram showing the manner of a case when a thumbnail corresponding to a newspaper application was dragged from the thumbnails displayed on the transition directive display and dragged into the right frame.
FIG. 15 is a diagram showing one example of screen images displayed on the display units after drag-and-drop was done as shown FIG. 14.

### Mode for Carrying Out the Invention

Now, the exemplary embodiment of the present invention will be described with reference to the drawings.

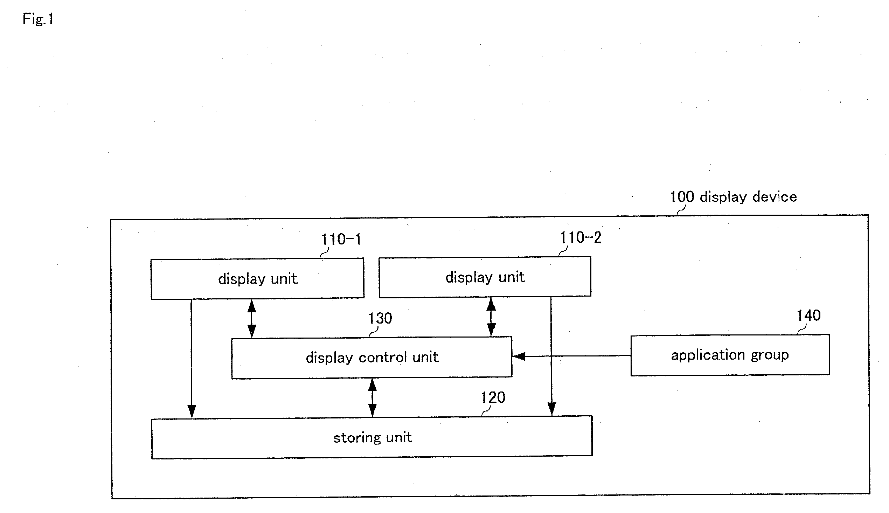

FIG. 1 is a diagram showing one exemplary embodiment of a display device according to the present invention.

As shown in FIG. 1, display device 100 in the present exemplary embodiment includes display units 110-1, 110-2, storing unit 120, display control unit 130.

Here in the embodiment shown in FIG. 1, a case of display device 100 including two display units is shown, but a device with three or more display units may also be allowed.

Display device 100 is loaded with application group 140 as a group of applications that run in display device 100. Here, the number of applications included in application group 140 is not particularly specified herein. Further, the applications included in application group 140 are those obtained from networks, those acquired by reading from recording media and others. "Application" in the following description indicates an application included in application group 140.

Display units 110-1, 110-2 are displays having a touch panel function. As to the relative relationship of the position of display unit 110-1 and the position of display unit 110-2 in display device 100, display unit 110-1 and display unit 110-2-are preferably arranged adjacent to each other.

Storing unit 120 stores the order in which multiple applications display screen images on display units 110-1, 110-2. Here, storing unit 120 stores the order of the applications being loaded only, among the applications whose screen images are displayed on display units 110-1, 110-2.

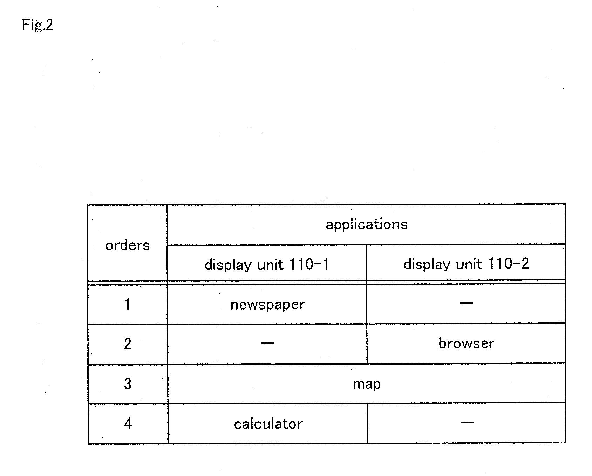

FIG. 2 is a chart showing one example of the order in which applications display screen images on display units 110-1, 110-2, stored in the storing unit shown in FIG. 1.

As shown in FIG. 2, the orders in association with applications for each of display units 110-1, 110-2 are stored as ordinal information in storing unit 120 shown in FIG. 1. In other words, the order of the screen images displayed by applications is stored as ordinal information together with display information that represents on which screen each image is displayed on, display unit 110-1 or display unit 110-2. Thereby, the order in which each application that is displayed on either display unit 110-1 or display unit 110-2 is stored.

The order indicates the order in which each application displays its screen image on display units 110-1 and/or 110-2. In the example shown in FIG. 2, the order ranges from "1" to "4".

The application indicates the application which displays its screen image on each of display units 110-1, 110-2. FIG. 2 presents an example in which kinds of applications such as "newspaper", "browser", "map" and "calculator" are stored. However, applications may be stored as ID information that can identify each application.

For example, as shown in FIG. 2, the order "1" is stored in association with the application "newspaper" in display unit 110-1. This shows that the newspaper application displays its screen image on display unit 110-1 in the first order. Herein it is shown that nothing is displayed on display unit 110-2 or the screen image that has been displayed before the order of the first one is displayed.

The order "2" is stored in association with Application "browser" in display unit 110-2. This shows that a browser application displayed its screen image on display unit 110-2 in the second order. Herein, it is shown that the screen image (newspaper) that has been displayed in the first order is displayed on display portion 110-1.

The order "3" is stored in association with the application "map" in display unit 110-1 and display unit 110-2. This shows that the map application displays its screen image on display unit 110-1 and display unit 110-2 in the third order. It is shown that this map is displayed across display unit 110-1 and display unit 110-2.

The order "4" is stored in association with the application "calculator" in display unit 110-1. This shows that the calculator application displays its screen image on display unit 110-1 in the fourth order. Herein, it is shown that the screen image (only the part of the map that has been displayed on display unit 110-2) displayed in the third order is displayed on display unit 110-2.

Here, since the storage capacity of storing unit 120 is not physically unlimited, it is necessary to put a limit on the order to be stored (limit on the area of storing the ordinal information). FIG. 2 shows an example in which the order of four items can be stored. Accordingly, when a new application (e.g., a scheduler) additionally starts to display its screen image, it is necessary to delete one of ordered items currently stored in order to store the scheduler in order "4". In this case, the application stored with the order "1" in storing unit 120, or one that was displayed the oldest may be deleted while the place of order is shifted up by one. Alternatively, the order of priority has been assigned in advance to each application, and the order may be updated by deleting based on the order of priority.

Storing unit 120 also stores the thumbnails corresponding to the applications included in application group 140.

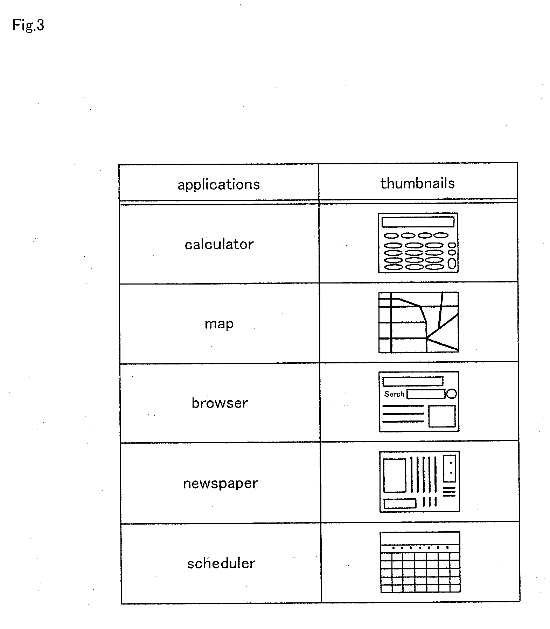

FIG. 3 is a chart showing one example of thumbnails each corresponding to an application, stored in storing unit 120 shown in FIG. 1.

As shown in FIG. 3, storing unit 120 shown in FIG. 1 stores thumbnails for respective applications.

The application shows an application included in application group 140. Though FIG. 3 shows a case in which kinds of applications such as "calculator", "map", "browser", "newspaper" and "scheduler" are stored, it is also possible to use a configuration in which ID information that permits identification of individual applications is stored.

The thumbnail is an index image which allows the user to identify the associated application, and may be generated by display device 100 (the method of generation is not particularly limited) or may be previously assigned to each application.

For example, the application "calculator" is stored in association with its thumbnail as shown in FIG 3. This thumbnail for calculator is used (displayed) to represent the calculator application when the aftermentioned strata display is performed.

The application "map" is stored in association with its thumbnail as shown in FIG. 3. This thumbnail for map is used (displayed) to represent the map application when the aftermentioned strata display is performed.

The application "browser" is stored in association with its thumbnail as shown in FIG. 3. This thumbnail for browser is used (displayed) to represent the browser application when the aftermentioned strata display is performed.

The application "newspaper" is stored in association with its thumbnail as shown in FIG. 3. This thumbnail for newspaper is used (displayed) to represent the newspaper application when the aftermentioned strata display is performed.

The application "scheduler" is stored in association with its thumbnail as shown in FIG. 3. This thumbnail for schedule is used (displayed) to represent the scheduler application when the aftermentioned strata display is used.

Here, FIG. 3 shows an example in which five applications in association with their thumbnails are stored in storing unit 120 shown in FIG. 1; the same number of thumbnails as the number of applications included in application group 140 are stored.

Display control unit 130 controls the display of the screen images of applications on display units 110-1, 110-2.

Further, when display unit 110-1 or display unit 110-2 has received a predetermined input by the touch panel function, display control unit 130 displays (displays in a strata representation) thumbnails corresponding to applications in accordance with the order in which storing unit 120 has stored application, on display units 110-1, 110-2, for each of display unit 110-1 or display unit 110-2. This predetermined input may be done by operating a control key provided for display device 100 or may be done by detecting on a touch on a special display which has been given on display portion 110-1 or display portion 110-2. Other than these, a long press of the home key or the like may be considered.

Further, when displaying thumbnails on display unit 110-1 or display unit 110-2 in a strata representation, the earlier order a thumbnail was stored in storing unit 120, in the lower layer does display control unit 130 display the thumbnail. The specific format will be described later.

When a thumbnail in the strata display displayed on display unit 110-1 or display unit 110-2 was selected by using the touch panel function, display control unit 130 displays the screen image displayed by the application corresponding to the selected thumbnail, on the associated display, display unit 110-1 or display unit 110-2.

When a thumbnail in the strata display displayed on display unit 110-1 or display unit 110-2 was dragged and dropped by using the touch panel function, display control unit 130 displays the screen image displayed by the application corresponding to the dragged and dropped thumbnail, on the display unit to which the thumbnail was dropped, of display unit 110-1 and display unit 110-2.

Next, the display method in display device 100 shown in FIG. 1 will be described.

To begin with, of the display method of display device 100 shown in FIG. 1, the process of storing the ordinal information will be described.

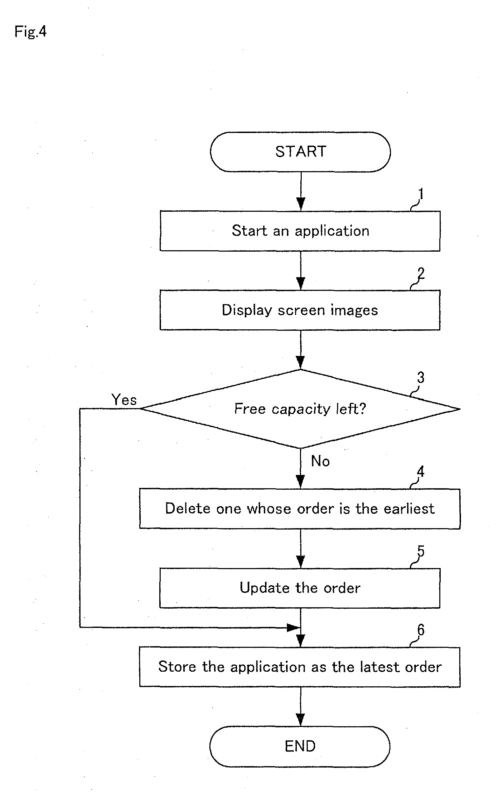

FIG. 4 is a flow chart for illustrating the process of storing ordinal information, of the display method in display device 100 shown in FIG. 1.

First, as an application is started at Step 1, a screen image is displayed on display unit 110-1 or display unit 110-2 by the application. In this case, whether the screen image of this application is displayed on display unit 110-1 or display unit 110-2, or whether the screen image is displayed across display unit 110-1 and display unit 110-2, is not particularly specified herein because this depends on the predetermined input instruction and the properties of the application.

Then, it is determined at Step 3, whether there is free capacity left in storing unit 120 to store the ordinal information of the application. That is, since the area for storing ordinal information has been previously set up (limited) as stated above, it is determined that no free capacity remains if, for example, ordinal information up to the fourth has been stored in storing unit 120. On the other hand, if ordinal information to or before the third only is stored in storing unit 120, it is determined that there is free capacity left.

If it is determined that there is no free capacity for storing the ordinal information of the application, the ordinal information on the earliest one among all the ordinal information stored in storing unit 120 is deleted at Step 4. Here, as described above, it is also possible to delete ordinal information in accordance with the orders of priority assigned to applications, instead of deleting the ordinal information of the earliest one.

For example, when the ordinal information shown in FIG. 2 has been stored in storing unit 120, the earliest order, i.e., the order "1" and its associated application "newspaper" are deleted.

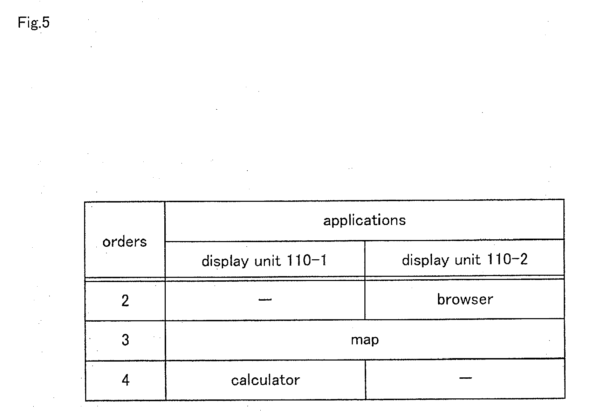

FIG. 5 is a chart showing one example of ordinal information stored in storing unit 120, with the earliest ordinal information deleted.

As shown in FIG. 5, the ordinal information in the order of "1" is deleted from the ordinal information shown in FIG. 2.

Subsequently, the order of the ordinal information stored in storing unit 120 is updated at Step 5.

For example, the order "1" was deleted, the order "2" replaces the order "1", and the order "3" replaces the order "2" and the order "4" replaces the order "3".

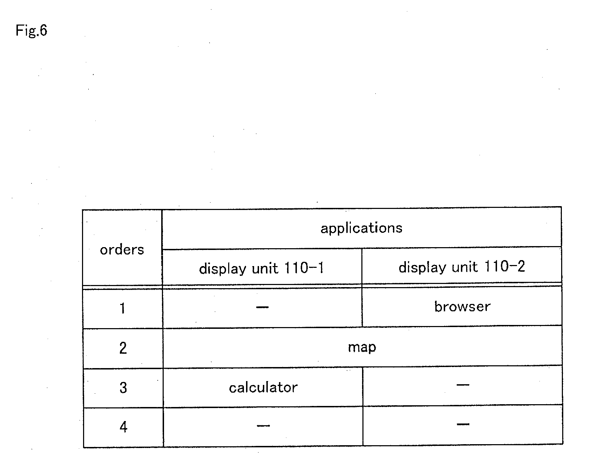

FIG. 6 is a chart showing one example of ordinal information stored in storing unit 120 with the order updated.

As shown in FIG. 6, each order shown in FIG. 5 is updated to one earlier, and the latest order "4" is added.

Then, the application started at Step 1 is stored as the latest order in the ordinal information stored in storing unit 120, at Step 6. When, for example, the application started at Step 1 is a scheduler and is displayed on display unit 110-2, the scheduler is stored in the place of the order "4" of display unit 110-2 in the ordinal information stored in storing unit 120.

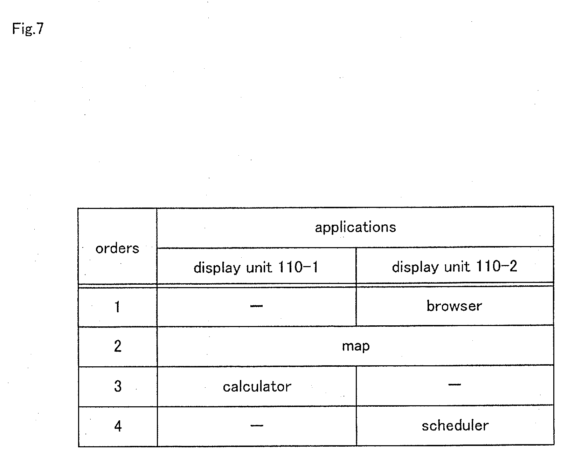

FIG. 7 is a chart showing one example of ordinal information stored in storing unit 120 with the application recorded in the latest order at Step 6.

As shown in FIG. 7, the scheduler is added in the order "4" in the ordinal information shown in FIG. 6.

In this way, in the order in which applications are started to display their screen images on display unit 110-1 or display unit 110-2, the applications that displayed the screen images are recorded for each of display units 110-1, 110-2.

Next, in the display method of display device 100 shown in FIG. 1, the process of displaying strata information will be described.

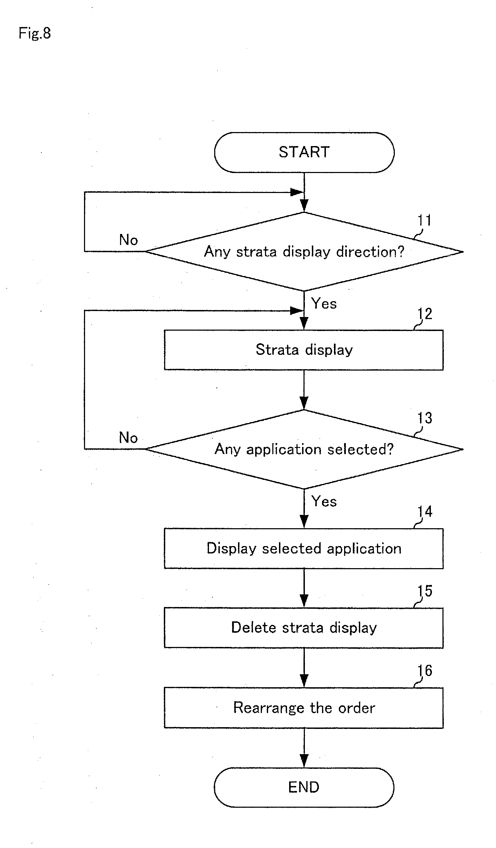

FIG. 8 is a flow chart for illustrating the process of displaying strata information, of the display method in display device 100 shown in FIG. 1.

Description herein will be made by taking an example when the ordinal information shown in FIG. 2 has been stored in storing unit 120. That is, the calculator application displays its screen image on display unit 110-1 while the map application displays its screen image on display unit 110-2.

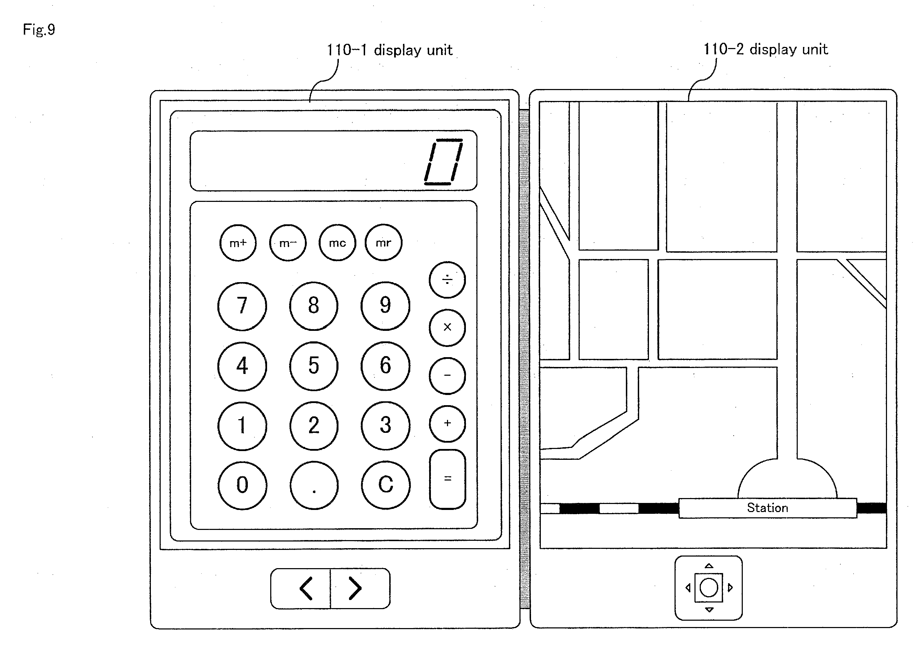

FIG. 9 is a diagram showing one example of the screen images displayed on the display units 110-1, 110-2 shown in FIG. 1.

As shown in FIG. 9, display unit 110-1 and display unit 110-2 are arranged left and right adjacent to each other.

Also, as shown in FIG. 9, the calculator, the application corresponding to the latest order "4" in display unit 110-1 shown in FIG. 2 are displayed on display unit 110-1.

On the other hand, the map, the application corresponding to the latest order "3" in display unit 110-2 shown in FIG. 2 is displayed on display unit 110-2.

In this condition, it is determined whether there is a strata display direction at Step 11. When the aforementioned "predetermined input" was given, display control unit 130 determines that there has been a strata display direction.

When it is determined that there has been a strata display direction, display control unit 130 reads out the ordinal information from storing unit 120, and the strata display is performed based on the retrieved ordinal information at Step 12. The display unit on which this strata display is displayed, either display unit 110-1 or display unit 110-2, is not particularly specified herein. The display may be constantly given to one of display unit 110-1 or display unit 110-2, may be displayed at random, or may be specified each time from the outside.

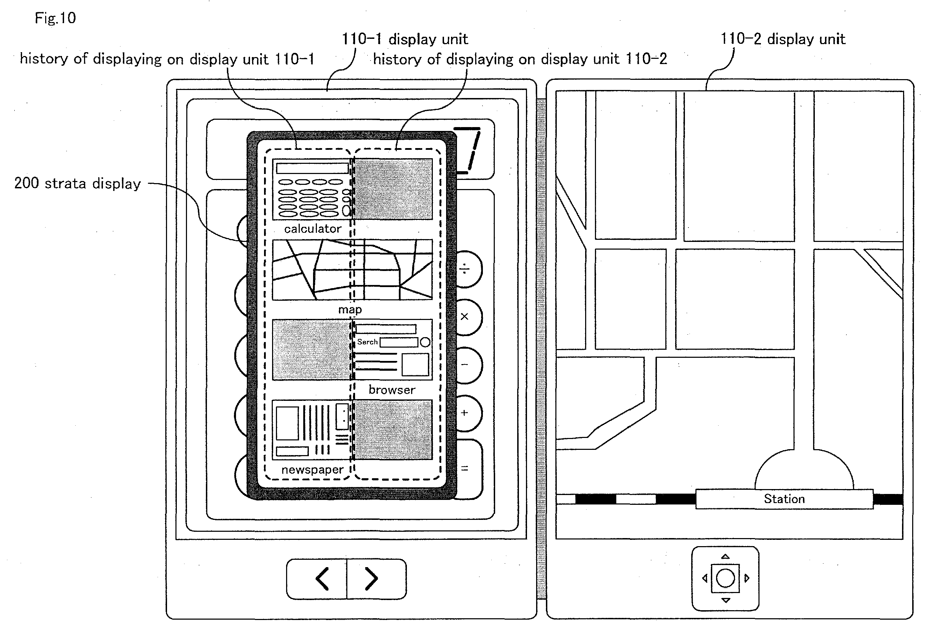

FIG. 10 is a diagram showing one example of a strata display, displayed on display unit 110-1.

As shown in FIG. 10, strata display 200 is displayed over the screen image of the calculator displayed on display unit 110-1. Further, this strata display 200 is displayed such that, as enclosed by the broken line in FIG. 10, the thumbnails of the applications that display screen images on display unit 110-1 are on the left side and the thumbnails of the applications that display screen images on display unit 110-2 are on the right side. Further, the thumbnails corresponding to the applications are displayed in a strata manner, in accordance with the order in which the applications display the screen images on display units 110-1, 110-2. Specifically, the earlier (older) is displayed in lower layers (at the bottom in the strata display) and the late (latest) is displayed in the upper layer (at the top in the strata display).

In the strata display shown in FIG. 10, the strata for display unit 110-1 is arranged with calculator, map and newspaper from the top layer. The strata for display unit 110-2 is arranged with map and browser from the top layer.

Now, the operation of this strata display will be described in detail.

When a strata display direction was given at Step 11, the ordinal information is read out from storing unit 120 by means of display control unit 130.

Subsequently, the thumbnails corresponding to the retrieved applications are read out from storing unit 120 by means of display control unit 130.

Then, from the retrieved ordinal information, display control unit 130 prepares a strata display in which, by arranging those with earlier orders in the lower layers and those with later orders in the upper layers, the associated thumbnails are displayed in display units 110-1, 110-2 as appropriate, and displays the strata display on display unit 110-1.

This display of the strata display makes it possible for the user to easily grasp how the screen images have transitioned.

Next, it is determined at Step 13 whether any of the thumbnails in the displayed strata display 200 is selected. The criterion for determination is based on whether or not a touch is detected at any of the thumbnails displayed in strata display 200 by the touch panel function provided for display unit 110-1. That is, when a touch is detected by any of the thumbnails displayed in strata display 200, the thumbnail is determined to be selected.

When it is determined that a thumbnail is selected, the application corresponding to the selected thumbnail displays its screen image at Step 14. Then, the screen to be displayed is changed to the screen image that is displayed by the application corresponding to the selected thumbnail.

Here, other than the selected case, it also possible to provide a configuration in which the same operation (transition of screen images) is made when the displayed area of the thumbnail is dragged and dropped to the displayed area in the top layer. In this case, it is possible to provide a configuration in which the display unit to which the thumbnail is dropped is made to be selectable so that the associated application can display the screen image on the display unit to which the thumbnail was dropped..

Then, strata display 200 is erased from display unit 110-1 at Step 15.

For example, when it is determined that the browser's thumbnail displayed on the right side in the strata display shown in FIG. 10 is selected, the browser application displays its screen image on display unit 110-2. At this moment, strata display 200 is erased.

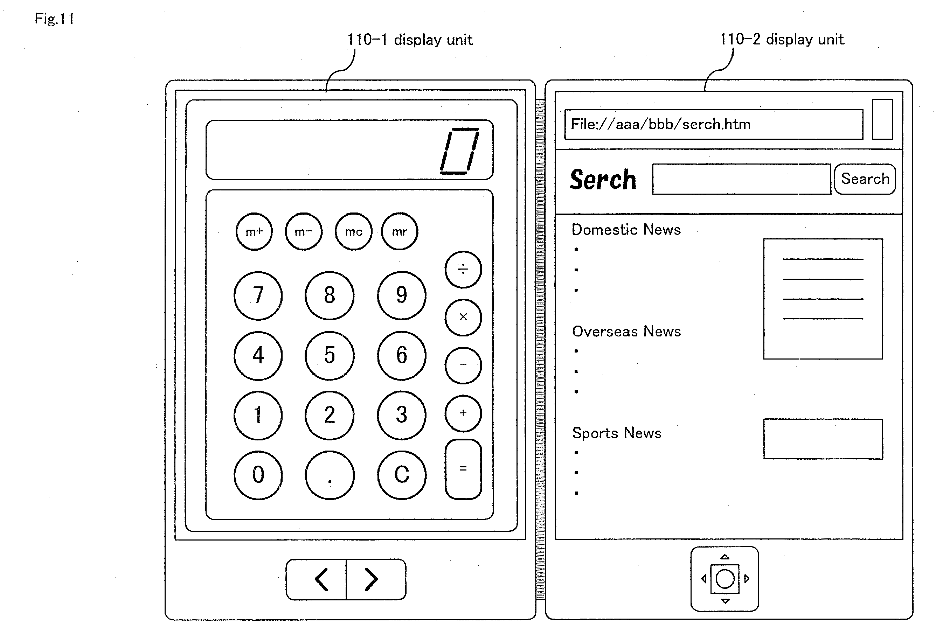

FIG. 11 is a diagram showing one example of screen images that are displayed on display units 110-1, 110-2 after the browser thumbnail is selected.

When the browser's thumbnail is selected, while the screen image of the calculator application remains displayed on display unit 110-1, the browser application displays its screen image on display unit 110-2, as shown in FIG. 11.

Further, since the displayed screen image has changed (the layer has transitioned), the ordinal information stored in storing unit 120 is rearranged at Step 16.

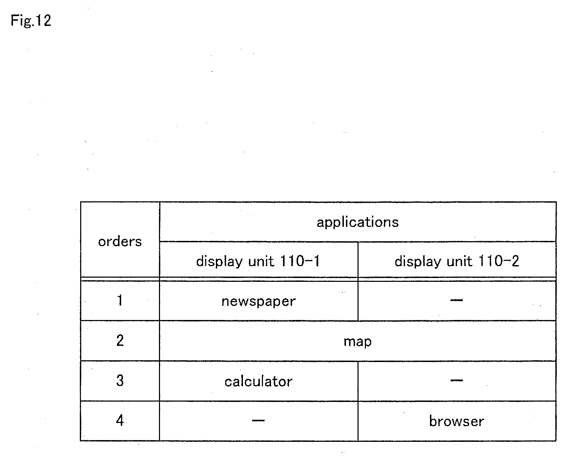

FIG. 12 is a chart showing one example of ordinal information after rearrangement is done at Step 16.

When the screen image is displayed on display unit 110-2 by the browser application, the order of the browser is set with "4" which is the latest, and the order of the calculator and map are shifted up by one, as shown in FIG. 12.

In this way, displaying the thumbnails corresponding to the applications which displayed the screen images for each of display units 110-1, 110-2 in a strata manner, enables the user to readily grasp the history of transition of screen images.

Further, when selection (touch) of a thumbnail included in the strata display is detected, the application corresponding to the selected thumbnail displays its screen image on the topmost layer, so that it is possible to realize such an easy screen image transition as to make the desired application display its screen image by simple selection.

Considered as a method of transitioning screen images is a scheme in which a list of applications being loaded is displayed to select an application that needs to be displayed on the topmost layer from the list so as to transit to that application.

Next, another example of the process for screen image transition will be described.

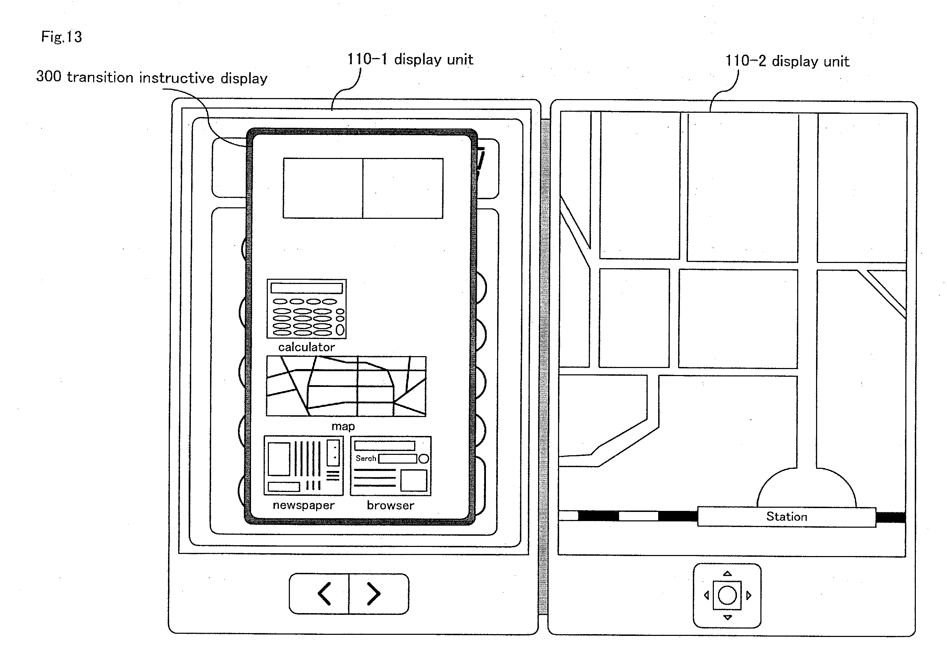

FIG. 13 is a diagram showing an example of transition directive display for performing screen image transition displayed on display unit 110-1.

In the above example, the thumbnails corresponding to the applications that display screen images in the past are displayed in association with left and right display units 110-1 and 110-2, based on the order of display in a strata manner. In this case, as shown in FIG. 13, the thumbnails corresponding to the applications that display screen images in the past and that are currently being loaded are listed and displayed on display unit 110-1 as transition instructive display 300 without showing the place of display unit 110-1 or 110-2 or the order of display.

As shown in FIG. 13, the thumbnails corresponding to the applications currently being loaded are displayed in a list on display unit 110-1 as transition directive display 300. Displaying this transition directive display 300 may be done when a predetermined input is given to display device 100, similarly to the case when the aforementioned strata screen image is displayed.

Further, as shown in FIG. 13, this transition directive display 300 has two frames displayed side by side over thumbnails. This two frames represent display unit 110-1 and display unit 110-2, respectively.

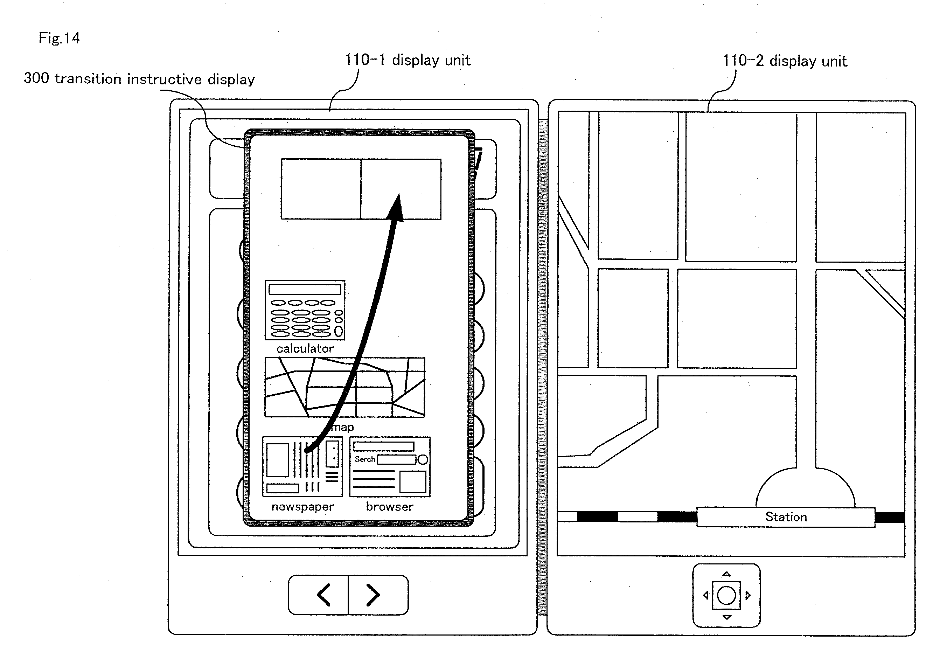

FIG. 14 is a diagram showing the process of a case when the thumbnail corresponding to a newspaper application is dragged from the thumbnail displayed on transition directive display 300 and dropped into the right frame (one that represents display unit 110-2). In this case, taken as the example is a case in which the calculator application displays its screen image on display unit 110-1 while transition directive display 300 is laid over it. Further, taken as the example is a case in which a map application displays its screen image on display unit 110-2.

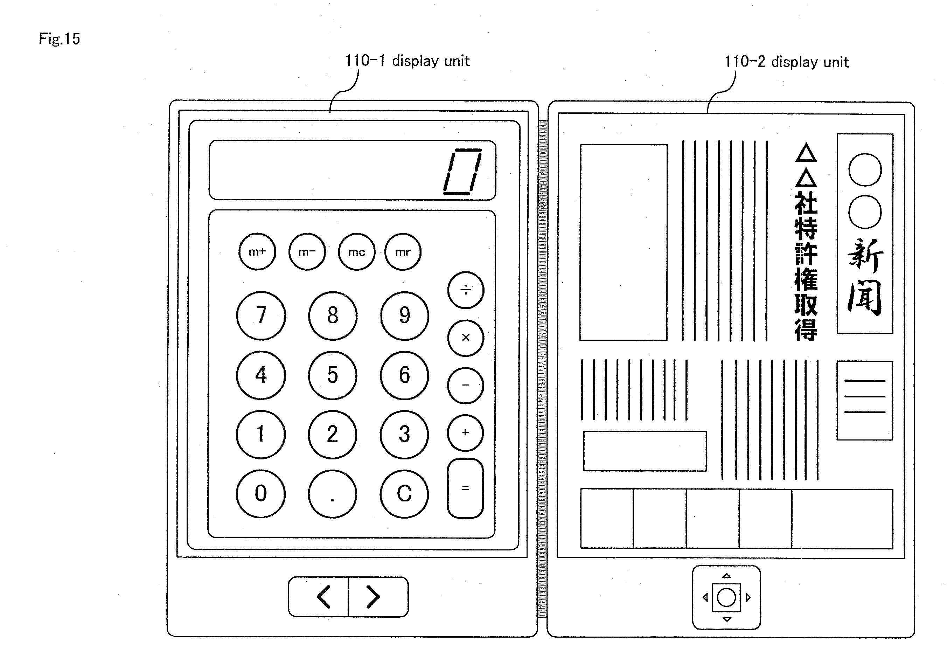

FIG. 15 is a diagram showing one example of screen images displayed on display units 110-1, 110-2 after drag-and-drop is done as shown FIG. 14.

When the thumbnail corresponding to the newspaper application is dragged and dropped into the right frame as shown in FIG. 14, the calculator application remains displaying its screen image on display unit 110-1 while the newspaper application corresponding to the dragged and dropped thumbnail displays its screen image on display unit 110-2, as shown in FIG. 15.

The process performed by each constituent of the above-described display device 100 may be realized by a logical circuit that is produced in a purpose-oriented manner. Alternatively, the process may be performed by recording a program that describes the content of processing into a recording medium readable by display device 100, causing display device 100 load the program recorded on this recording medium to execute the program. The recording media readable by display device 100 indicate removable recording media such as floppy (registered trademark) disks, magneto optical disks, DVDs, CDs, etc., and memories such as ROM, RAM etc., HDDs and the like that are built in display device 100. The program recorded on the recording medium is read out by the CPU (not shown) provided for display device 100, so that the same process as described above is executed by CPU control. Here, the CPU functions as a computer that executes a program loaded from a recording medium on which the program has been recorded.

Although the present invention has been explained with reference to the exemplary embodiments, the present invention should not be limited to the above exemplary embodiments. Various modifications that can be understood by those skilled in the art may be made to the structures and details of the present invention within the scope of the present invention.

This application claims priority based on Japanese Patent Application No. 2010-213795, filed on September 24, 2010, and incorporate all the disclosure thereof herein.

## Claims

1. A display device comprising:
a plurality of display units having a touch panel function;
a display control unit for controlling display of screen images on the multiple display units; and,
a storing unit for storing the order in which a plurality of applications being loaded display the screen images on the display units, with display information indicating the display unit on which each screen image is displayed, from among the multiple display units, wherein
the display control unit displays thumbnails corresponding to the applications in a strata manner in accordance with the order and display information stored in the storing unit when the display units receive a predetermined input by the touch panel function.

2. The display device according to Claim 1, wherein the display control unit displays a thumbnail in the lower layer, in the order beginning with the earliest thumbnail.

3. The display device according to Claim 1, wherein when a thumbnail that is displayed on the display unit is selected by the touch panel function, the display control unit displays the screen image that is displayed by the application corresponding to the thumbnail, on the associated display unit.

4. The display device according to Claim 1, wherein the storing unit stores only the order of the applications being loaded, from among the applications that display the screen images on the display units.

5. The display device according to Claim 3, wherein when a thumbnail that is displayed on the display units is dragged and dropped by using the touch panel function, the display control unit displays the screen image that is displayed by the application corresponding to the thumbnail, on the display unit to which the thumbnail is dropped, from among the multiple display units.

6. A display method of displaying screen images in a device equipped with a plurality of displays having a touch panel function, comprising:
a storing step of storing the order in which a plurality of applications being loaded display the screen images on the displays, with display information indicating the display on which each screen image is displayed, from among the multiple displays; and
a strata display step of displaying thumbnails corresponding to the applications in a strata manner in accordance with the stored order and display information when the displays receive a predetermined input by the touch panel function.

7. The display method according to Claim 6, wherein the strata display step displays a thumbnail in the lower layer, in the order beginning with the earliest thumbnail.

8. The display method according to Claim 6, further comprising:
a step of displaying the screen image that is displayed by the application corresponding to the thumbnail, on the associated display when a thumbnail that is displayed on the display is selected by using the touch panel function.

9. The display method according to Claim 6, wherein the storing step stores only the order of the applications being loaded, from among the applications that display the screen images on the displays.

10. The display method according to Claim 8, further comprising the step of: when a thumbnail that is displayed on the displays is dragged and dropped by using the touch panel function,
displaying the screen image that is displayed by the application corresponding to the thumbnail, on the display to which the thumbnail is dropped, from among the multiple displays.

11. A program causing a device which is equipped with a plurality of displays having a touch panel function and displays screen images on the displays, to execute
a storing procedure of storing the order in which a plurality of applications being loaded display the screen images on the displays, with display information indicating the display on which each screen image is displayed, from among the multiple displays, and
a strata display procedure of displaying thumbnails corresponding to the applications in a strata manner in accordance with the stored order and display information when the display receives a predetermined input by the touch panel function.

12. The program according to Claim 11, **characterized in that** the strata display procedure displays a thumbnail in the lower layer, in the order beginning with the earliest thumbnail.

13. The program according to Claim 11, for executing a procedure which, when a thumbnail that is displayed on the display is selected by using the touch panel function, executes a procedure of displaying the screen image that is displayed by the application corresponding to the thumbnail, on the associated display.

14. The program according to Claim 11, **characterized in that** the storing procedure stores only the order of the applications being loaded, from among the applications that display the screen images on the displays.

15. The program according to Claim 13, for executing a procedure which, when a thumbnail that is displayed on the displays is dragged and dropped by using the touch panel function,
executes a procedure of displaying the screen image that is displayed by the application corresponding to the thumbnail, on the display to which the thumbnail is dropped, from among the multiple displays.

## Amended claims

### Amended claims under Art. 19.1 PCT

**1.** After amendment) A display device comprising:
a plurality of display units having a touch panel function;
a display control unit for controlling display of screen images on the multiple display units; and,
a storing unit for storing the order in which a plurality of applications being loaded display the screen images on the display units, with display information indicating the display unit on which each screen image is displayed, from among the multiple display units, wherein
the display control unit displays brief display information corresponding to the applications in a strata manner in accordance with the order and display information stored in the storing unit when the display units receive a predetermined input by the touch panel function.

**2.** After amendment) The display device according to Claim 1, wherein the display control unit displays brief display information in the lower layer, in the order beginning with the earliest brief display information.

**3.** After amendment) The display device according to Claim 1, wherein when a brief display information that is displayed on the display unit is selected by the touch panel function, the display control unit displays the screen image that is displayed by the application corresponding to the brief display information, on the associated display unit.

**4.** The display device according to Claim 1, wherein the storing unit stores only the order of the applications being loaded, from among the applications that display the screen images on the display units.

**5.** After amendment) The display device according to Claim 3, wherein when a brief display information that is displayed on the display units is dragged and dropped by using the touch panel function, the display control unit displays the screen image that is displayed by the application corresponding to the brief display information, on the display unit to which the brief display information is dropped, from among the multiple display units.

**6.** After amendment) A display method of displaying screen images in a device equipped with a plurality of displays having a touch panel function, comprising:
a storing step of storing the order in which a plurality of applications being loaded display the screen images on the displays, with display information indicating the display on which each screen image is displayed, from among the multiple displays; and
a strata display step of displaying brief display information corresponding to the applications in a strata manner in accordance with the stored order and display information when the displays receive a predetermined input by the touch panel function.

**7.** After amendment) The display method according to Claim 6, wherein the strata display step displays a brief display information in the lower layer, in the order beginning with the earliest brief display information.

**8.** After amendment) The display method according to Claim 6, further comprising:
a step of displaying the screen image that is displayed by the application corresponding to the brief display information, on the associated display when a brief display information that is displayed on the display is selected by using the touch panel function.

**9.** The display method according to Claim 6, wherein the storing step stores only the order of the applications being loaded, from among the applications that display the screen images on the displays.

**10.** After amendment) The display method according to Claim 8, further comprising the step of: when a brief display information that is displayed on the displays is dragged and dropped by using the touch panel function,
displaying the screen image that is displayed by the application corresponding to the brief display information, on the display to which the brief display information is dropped, from among the multiple displays.

**11.** After amendment) A program causing a device which is equipped with a plurality of displays having a touch panel function and displays screen images on the displays, to execute
a storing procedure of storing the order in which a plurality of applications being loaded display the screen images on the displays, with display information indicating the display on which each screen image is displayed, from among the multiple displays, and
a strata display procedure of displaying brief display information corresponding to the applications in a strata manner in accordance with the stored order and display information when the display receives a predetermined input by the touch panel function.

**12.** After amendment) The program according to Claim 11, **characterized in that** the strata display procedure displays a brief display information in the lower layer, in the order beginning with the earliest brief display information.

**13.** After amendment) The program according to Claim 11, for executing a procedure which, when a brief display information that is displayed on the display is selected by using the touch panel function, executes a procedure of displaying the screen image that is displayed by the application corresponding to the brief display information, on the associated display.

**14.** The program according to Claim 11, **characterized in that** the storing procedure stores only the order of the applications being loaded, from among the applications that display the screen images on the displays.

**15.** After amendment) The program according to Claim 13, for executing a procedure which, when a brief display information that is displayed on the displays is dragged and dropped by using the touch panel function,
executes a procedure of displaying the screen image that is displayed by the application corresponding to the brief display information, on the display to which the brief display information is dropped, from among the multiple displays.
